# EUROPEAN PATENT SPECIFICATION

(11) **EP 0 796 783 B1**
(45) Date of publication and mention of the grant of the patent: **21.06.2000**
(21) Application number: 97104362.5
(22) Date of filing: 14.03.1997
(51) Int. Cl.: B62L 3/08

(54) **Brake system for a vehicle with a handlebar**
Bremsanlage für Fahrzeug mit Lenkstange
Système de freinage pour véhicule équipé d'un guidon

(30) Priority: 21.03.1996 JP 6428196
(43) Date of publication of application: 24.09.1997
(73) Proprietor: NISSIN KOGYO CO., LTD., Ueda-shi, Nagano-ken (JP)
(72) Inventor: Matsuno, Isao, c/o Nissin Kogyo Co., Ltd, Ueda-shi, Nagano (JP)
(74) Representative: Buzzi, Franco

(56) References cited:
- GB-A- 2 154 292
- GB-A- 2 204 371
- JP-A- 56 154 378

## Description

### BACKGROUND OF THE INVENTION

### FIELD OF THE INVENTION

The present invention relates to a bar handle vehicle having a front wheel and a rear wheel, such as a motor-bicycle and a bicycle with a prime mover, and more particular to a bar handle vehicle brake system of two-system interlock type which operates a front wheel brake and a rear wheel brake simultaneously with a first brake operating member and a second brake operating member.

### RELATED ART

There has been known a conventional two-system interlock type brake system which brakes the front wheel and the rear wheel of a bar handle vehicle such as a motor-bicycle simultaneously by the operations of a first brake operating member and a second operating member, as disclosed in, for instance, Unexamined Japanese Patent Application (OPI) No. 154378/1981 (the term "OPI" as used herein means an "unexamined published application").

In the conventional art, a hydraulic pressure pipe connected to a hydraulic pressure master cylinder operated by the first brake operating member, and a hydraulic pressure pipe connected to a hydraulic pressure master cylinder operated by the second brake operating member, are each branched into a front wheel braking branch pipe and a rear wheel braking branch pipe. The first branch pipes of the first and second brake operating systems are connected to the front wheel, and the remaining second branch pipes are connected to the rear wheel, so that, not only when the first brake operating member is operated but also when the second brake operating member is operated, both of the front and rear wheels are braked so that the vehicle is stably stopped at a short distance.

In the conventional structure as described above, the front and rear brakes are each a hydraulic pressure type disk brake which operates the caliper body directly with the hydraulic pressure from the hydraulic pressure master cylinder. Hence, the number of brake systems from the first and second brake operating members to the hydraulic pressure disk brakes is four; two brake systems for each of the first and second brake operating member. This structure makes it rather difficult to lay the hydraulic pressure pipes. On the other hand, those four brake systems are independent of one another. Hence, it is necessary to provide two caliper bodies for each of the front and rear brakes, and the hydraulic pressure brakes are each high both in component cost and in assembling cost. That is, the conventional art requires high manufacturing cost.

In the case where the bar handle vehicle is a soft motor-cycle or a scooter-type vehicle whose wheels are small in diameter, a power unit is positioned on one side of the rear wheel which includes the engine, the power transmission mechanism, and the speed changing mechanism. Hence, it is considerably difficult to apply the hydraulic pressure type brake to the rear wheel; that is, to obtain a space for the disk rotor and the caliper body.

### SUMMARY OF THE INVENTION

In view of the foregoing, an object of the present invention is to provide a bar handle vehicle brake system which is of two-system interlock type that a front brake and a rear brake are activated simultaneously by the operation of the first and/or second brake operating member, and which is simple in structure and accordingly low in manufacturing cost, and which may be applied to a soft motor-bicycle or a scooter-type vehicle whose wheels are small in diameter, without modification of the vehicle body.

The foregoing object of the invention has been achieved by a provision of the following arrangements.
(1) A first aspect of the invention is a two-system interlock type vehicle brake system for a bar handle vehicle in which a hydraulic pressure pipe connecting to a first hydraulic pressure master cylinder which is operated with a first brake operating member branches into a front wheel braking branch pipe and a rear wheel braking branch pipe, while a hydraulic pressure pipe connecting to second hydraulic pressure master cylinder which is operated with a second brake operating member branches into a front wheel braking branch pipe and a area wheel braking branch pipe, so that a front wheel brake and a rear wheel brake are interlocked by the operations of the first and second brake operating members,
   wherein, according to a first aspect of the invention,
   one of the front and rear wheel brakes is a mechanical type brake which is operated in a draw mode with two link device such as wire cables or rods,
   a first cable actuator connects between one of the link device and one of the branch pipes in the system of the first brake operating member, while a second cable actuator connects between the other link device and one of the branch pipes in the system of the second brake operating member,
   hydraulic pressure chambers for introducing hydraulic pressures produced in the hydraulic pressure master cylinders, and pistons which are moved in the cylinder bores by the hydraulic pressures thus introduced into the hydraulic pressure chambers, are provided in cylinder bores formed in the cable actuators, respectively,
   one of the link device is connected to the piston in the first cable actuator,
   the one branch pipe in the system of the first brake operating member connects to the hydraulic pressure chamber in the first cable actuator,
   the other link device connects to the piston in the second cable actuator, and
   the other branch pipe in the system of the second brake operating member connects to the hydraulic pressure chamber in the second cable actuator.
(2) An alternative second aspect of the invention is a two-system interlock type vehicle brake system for a bar handle vehicle in which a hydraulic pressure pipe connecting to a first hydraulic pressure master cylinder which is operated with a first brake operating member, branches into a front wheel braking branch pipe and a rear wheel braking branch pipe, while a hydraulic pressure pipe connecting to second hydraulic pressure master cylinder which is operated with a second brake operating member, branches into a front wheel braking branch pipe and a area wheel braking branch pipe, so that a front wheel brake and a rear wheel brake are interlocked by the operations of the first and second brake operating members,
   wherein, according to a second aspect of the invention,
   one of the front and rear wheel brakes is a mechanical type brake which is operated in a draw mode with link device such as a wire cable or rod,
   a cable actuator is connected between the link device and the one branch pipe in the system of the first brake operating member and the one branch pipe in the system of the second brake operating member,
   a piston is accommodated in a cylinder bore formed in the cable actuator,
   the cylinder bore being a stepped cylinder bore including a large-diameter cylinder bore and a small diameter cylinder bore,
   the piston being a stepped piston having a large-diameter piston and a small-diameter piston which are accommodated in the large-diameter cylinder bore and the small-diameter cylinder bore, respectively, and
   a first hydraulic pressure chamber is formed between the bottom of the large-diameter cylinder bore and the large-diameter piston, while a second hydraulic pressure chamber is formed between the bottom of the small-diameter cylinder bore and the small-diameter piston,
   the first hydraulic pressure chamber and the second hydraulic pressure chamber are connected to one of the branch pipes in the system of the first brake operating member and one of the branch pipes in the system of the second brake operating member.

   In the second aspect of the invention, the first brake operating member may be a right brake lever, while the second brake operating member may be a left brake lever or a foot pedal, and one of the branch pipes in the system of the first brake operating member may be connected to the first hydraulic pressure chamber, while one of the branch pipes in the system of the second brake operating member may be connected to the second hydraulic pressure chamber.
(3) Further, a third aspect of the invention is a two-system interlock type vehicle brake system for a bar handle vehicle in which a hydraulic pressure pipe connected to a first hydraulic pressure master cylinder which is operated with a first brake operating member, branches into a front wheel braking branch pipe and a rear wheel braking branch pipe, while a hydraulic pressure pipe connected to second hydraulic pressure master cylinder which is operated with a second brake operating member, branches into a front wheel braking branch pipe and a rear wheel braking branch pipe, so that a front wheel brake and a rear wheel brake are interlocked by the operations of the first and second brake operating members,
   wherein, according to a third aspect of the invention,
   the front and rear wheel brakes are mechanical type brakes which are operated in a draw mode with link device such as wire cables or rods,
   a first cable actuator is connected between one of the link device and one of the branch pipes in the system of the first brake operating member and one of the branch pipes in the system of the second brake operating member,
   a second cable actuator is connected between the other link device and the other branch pipe in the system of the first brake operating member and the other branch pipe in the system of the second brake operating member, and
   pistons are accommodated in cylinder bores formed in the cable actuators, respectively,
   each cylinder bore being a stepped cylinder bore including a large-diameter cylinder bore and a small diameter cylinder bore,
   each piston being a stepped piston having a large-diameter piston and a small-diameter piston which are accommodated in the large-diameter cylinder bore and the small-diameter cylinder bore, respectively,
   a first hydraulic pressure chamber is formed between the bottom of each large-diameter cylinder bore and each large-diameter piston, while a second hydraulic pressure chamber is formed between the bottom of each small-diameter cylinder bore and each small-diameter piston,
   the first hydraulic pressure chamber and the second hydraulic pressure chamber of the first cable actuator being connected to one of the branch pipes in the system of the first brake operating member and one of the branch pipes in the system of the second brake operating member, respectively, while the first hydraulic pressure chamber and the second hydraulic pressure chamber of the second cable actuator being connected to the other branch pipe in the system of the first brake operating member and the other branch pipe in the system of the second brake operating chamber.

In the above-described third aspect of the invention,
the first brake operating member may be a right brake lever, and
one of the branch pipes in the system of the first brake operating member may be connected to the first hydraulic pressure chamber of the first cable actuator, while the other branch pipe in the system of the first brake operating member is connected to the second hydraulic pressure chamber of the first cable actuator, and
the second brake operating member may be a left brake lever or a foot pedal, and
one of the branch pipes in the system of the second brake operating member may be connected to the second hydraulic pressure chamber of the first cable actuator, while the other branch pipe in the system of the second brake operating member may be connected to the first hydraulic pressure chamber of the second cable actuator.

### BRIEF DESCRIPTION OF THE DRAWINGS

FIG. 1 is an explanatory diagram outlining the arrangement of an example of a bar handle vehicle brake system which constitutes of a first embodiment;
FIG. 2 is an explanatory diagram outlining the arrangement of another example of the bar handle vehicle brake system, which constitutes of a second embodiment; and
FIG. 3 is an explanatory diagram outlining the arrangement of another example of the bar handle vehicle brake system, which constitutes of a third embodiment.

### DESCRIPTION OF THE PREFERRED EMBODIMENTS

Preferred embodiments of the present invention will now be described with reference to the accompanying drawings.

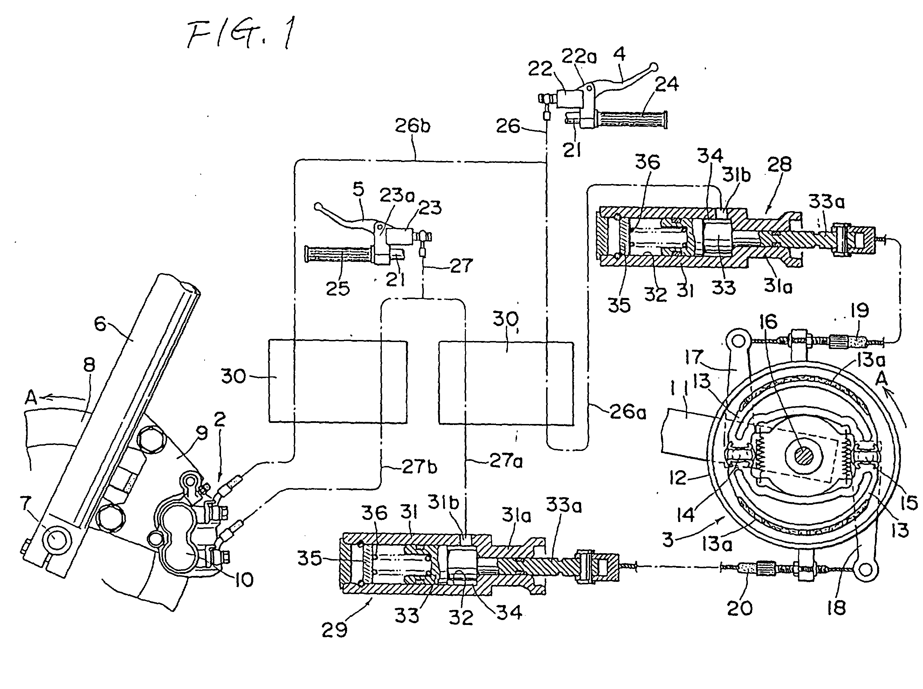

FIG. 1 is an example of a bar handle vehicle brake system, which constitutes a first embodiment of the invention. In FIG. 1, a brake system 1 according to the invention is of two-system interlock type in which a front brake 2 and a rear brake 3 of a bar handle vehicle such as a motor bicycle and a bicycle with a prime mover are activated simultaneously by the operation of a first brake operating member 4 or a second brake operating member 5. The front wheel brake 2 is a hydraulic-pressure type disk brake, and the rear wheel brake 3 is a mechanical drum brake.

The front wheel is provided with: a front axle 7 coupled to a lower end of a front fork 6; a disk rotor 8 supported in such a manner that it is rotatable together with the front wheel in the direction of the arrow A; and a caliper body 10 which is disposed behind the lower portion of the front fork 6 in such a manner that it is supported by a caliper bracket 9 which is set across the disk rotor 8. On the other hand, the rear wheel brake 3 is disposed inside the rear wheel (not shown). More specifically, the rear wheel brake 3 is of dual 2-leading type that, inside a back plate 12 secured to the rear end of a swing arm 11, a pair of arcuate brake shoes 13 are arranged in such a manner that they confront with each other, and expanding cam shafts 14 and 15 are arranged between the ends of those brake shoes 13. A brake drum (not shown) coupled through a rear axle 16 to the rear wheel is disposed between the edge of the outer periphery of the back plate 12 and the brake shoes 12 and 13 in such a manner that it is rotatably in the direction of the arrow A. Wire cables 19 and 20 are connected to the ends of brake arms 17 and 18 which protrude outside the back plate 12 from the cam shafts 14 and 15.

A right brake lever and a left brake lever are applied to the first brake operating member 4 and the second brake operating member 5, respectively. The base end portions of the first and second brake operating members 4 and 5 are swingably coupled to the lever brakes 22a and 23a of hydraulic pressure master cylinders 22 and 23 which are fixedly secured to handle levers 21 and 21, respectively. The first and second brake operating members 4 and 5 are arranged in front of an accelerator grip 24, and a stationary grip 25, respectively. A hydraulic pressure pipe 26 connects to the hydraulic pressure master cylinder 22 which is operated by the first brake operating member 4; and a hydraulic pressure pipe 27 connects to the hydraulic pressure master cylinder 23 which is operated by the second brake operating member 5. Those hydraulic pressure pipes 26 and 27 branch into two branch pipes 26a and 26b, and two branch pipes 27a and 27, respectively.

The one branch pipe 26a of the hydraulic pressure pipe 26 is coupled through a first cable actuator 28 to the one wire cable 19, and similarly the other branch pipe 26b of the hydraulic pressure pipe 26 connects directly to the caliper body 10 of the front brake 2. The hydraulic pressure system operated by the first brake operating member 4 is divided into two systems - one of the two systems is for braking the rear wheel which extends from the branch pipe 26a of the hydraulic pressure pipe 26 through the wire cable 19 to the brake arm 17, and the other is for braking the front wheel which extends from the branch pipe 26b of the hydraulic pressure pipe to the caliper body 10.

The one branch pipe 27a of the hydraulic pressure pipe 27 connects through the second cable actuator 29 to the other wire cable 20; and the other branch pipe 27b is coupled directly to the caliper body 10. The hydraulic pressure system controlled by the second brake operating member 5 is divided into two systems - one of the two system is for braking the rear wheel which extends from the branch pipe 27a of the hydraulic pressure pipe 27 through the wire cable 20 to the brake arm 18, and the other is for braking the front wheel which extends from the branch pipe 27b of the hydraulic pressure pipe 27 to the caliper body 10. The caliper body 10 of the front wheel has two independent hydraulic pressure chambers inside it; that is, the two systems for braking front wheel are separated from each other inside the caliper body 10.

The rear wheel braking branch pipes 26a and 27a, and the front wheel braking branch pipes 26b and 27b extend through hydraulic pressure control sections 30 such as an ABS (anti-lock brake system). When the hydraulic pressures applied from the hydraulic pressure master cylinders 22 and 23 to the branch pipes 26a and 26b and the branch pipes 27a and 27b through the hydraulic pressure pipes 26 and 27, respectively, are excessively high with respect to the vehicle speed and the condition of the road, the hydraulic pressures are controlled by the hydraulic pressure control section 30, so that the locking of the front and rear wheels is effectively prevented, and the vehicle is stably stopped at a shortest braking distance.

The first and second cable actuators 28 and 29 serve as operating-force conversion devices for converting hydraulic pressure operating forces supplied from the hydraulic pressure master cylinders 22 and 23 into mechanical operating forces, to operate the rear wheel brake 3. Each of the first and second cable actuators 28 and 29 are designed as follows: A piston is inserted liquid-tight into a bottomed cylinder bore 32 in a cylinder body 31, in such a manner that a hydraulic pressure chamber 34 is formed between the bottom of the cylinder bore 32 and the outer cylindrical surface of the base end portion of the piston 33. A return spring 36 is inter-posed between the front end portion of the piston 33 and a receiving board 35 provided near the opening of the cylinder bore, so as to urge the piston 33 towards the bottom of the cylinder bore 31 at all times. A rod 33a small in diameter is extended from the base end of the piston in such a manner that it penetrates the bottom wall 31a of the cylinder bore 32. The one wire cable 19 connects to the outer end of the rod 33a of the first cable actuator 28; and similarly the other wire cable 20 connects to the outer end of the rod 33a of the second cable actuator 29.

Now, the operation of the brake system thus designed according to the first embodiment will be described.

When the first brake operating member 4 is gripped, the hydraulic pressure master cylinder 22 generates a hydraulic pressure. The hydraulic pressure thus generated is divided into two parts; that is, it is applied to the branch pipes 26a and 26b. The hydraulic pressure applied to the branch pipe 26a (hereinafter referred to as "a first hydraulic pressure", when applicable) is applied through the hydraulic pressure control section 30 to the first cable actuator 28 for the rear wheel brake; while the hydraulic pressure applied to the branch pipe 26b (hereinafter referred to as "a second hydraulic pressure", when applicable) is applied through the hydraulic pressure control section 30 to the hydraulic pressure chamber in the caliper body of the front wheel brake 2, so that the frictional pad is brought into slide contact with the disk rotor 8, thus braking the front wheel.

The first hydraulic pressure applied to the first cable actuator 28 is applied through an inlet port 31b to the hydraulic pressure chamber 34, to push the piston 33 towards the opening of the cylinder bore 32; i.e., to pull the rod 33a inside the cylinder bore 32, thereby to draw the wire cable 19. As a result, the one brake arm 17 of the rear wheel brake 3 is swung about the cam shaft 14 to open the brake shoes 13, so that the liners 13a of the brake shoes 13 are brought into slide contact with the inner cylindrical surface of the brake drum, thus braking the rear wheel.

On the other hand, when the second brake operating member 5 is gripped, the hydraulic pressure master cylinder 23 generates a hydraulic pressure. The hydraulic pressure thus generated is divided into two parts; that is, it is applied to the branch pipes 27a and 27b. The hydraulic pressure applied to the branch pipe 27a (hereinafter referred to as "a third hydraulic pressure", when applicable) is applied through the hydraulic pressure control means 30 to the second cable actuator 29 for braking the rear wheel; while the hydraulic pressure applied to the branch pipe 27b (hereinafter referred to as "a fourth hydraulic pressure", when applicable) is applied through the hydraulic pressure control section 30 to the hydraulic pressure chamber in the caliper body 10, so that the frictional pad is brought into slide contact with the disk rotor 8, thus braking the front wheel.

The third hydraulic pressure applied to the second cable actuator 29 is supplied through an inlet port 31b to the hydraulic pressure chamber 34, to push the piston towards the opening of the cylinder bore 32; i.e., to pull the rod 33a into the cylinder bore 31, thus drawing the wire cable 20. As a result, the brake arm 18 of the rear wheel brake 3 is swung about the cam shaft 15 to open the brake shoes 13, so that the linings 13a of the brake shoes 13 are brought into slide contact with the inner cylindrical surface of the brake drum, thus braking the rear wheel.

As is apparent from the above description, the brake system of the invention is of two-system interlock type that, when the first brake operating member 4 and/or the second brake operating member 5 is operated, the front wheel brake and the rear wheel brake are both operated at the same time. And, the cable actuators 28 and 29 are included in the two hydraulic pressure systems for the rear wheel brake, and a mechanical type drum brake low in manufacturing cost is employed as the rear wheel brake. Hence, the rear wheel brake 5 is lower in manufacturing cost than a hydraulic pressure type rear wheel brake. Furthermore, the cable actuators 28 and 29 are coupled to the brake arms 17 and 18 of the rear brake 3 through the wire cables 19 and 20 which is flexible and smaller in diameter than the hydraulic pressure pipes. Hence, the hydraulic pressure brake system can be freely laid on the vehicle body at low cost.

The mechanical type brake employed as the rear wheel brake 3 is small in diameter and compact when compared with a hydraulic pressure type brake. Hence, with the rear wheel brake 3, unlike the hydraulic pressure type brake, it is unnecessary to provide spaces for the disk rotor and the caliper body. Furthermore, the brake system of the invention can be readily applied even to the small rear wheel of a bar handle vehicle small in displacement such as a soft bike and a scooter which has a power unit (including the engine, the power transmitting mechanism, and the speed changing mechanism) on one side of the rear wheel, without modification of the tire size and the existing vehicle body structure. This feature markedly improves the brake performance of a bar handle vehicle without changing the specification of the latter.

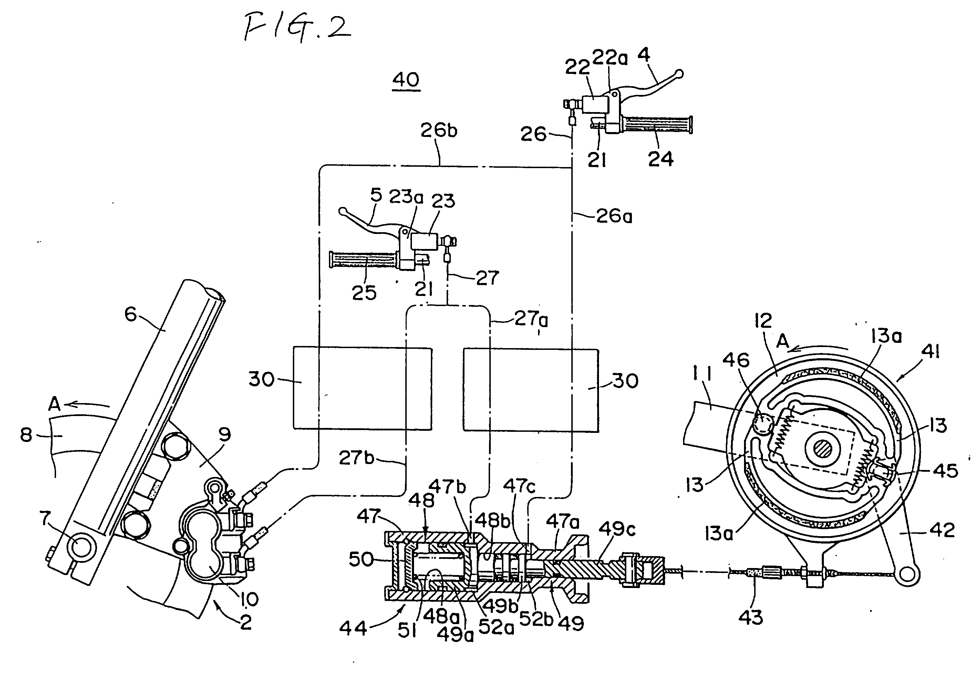

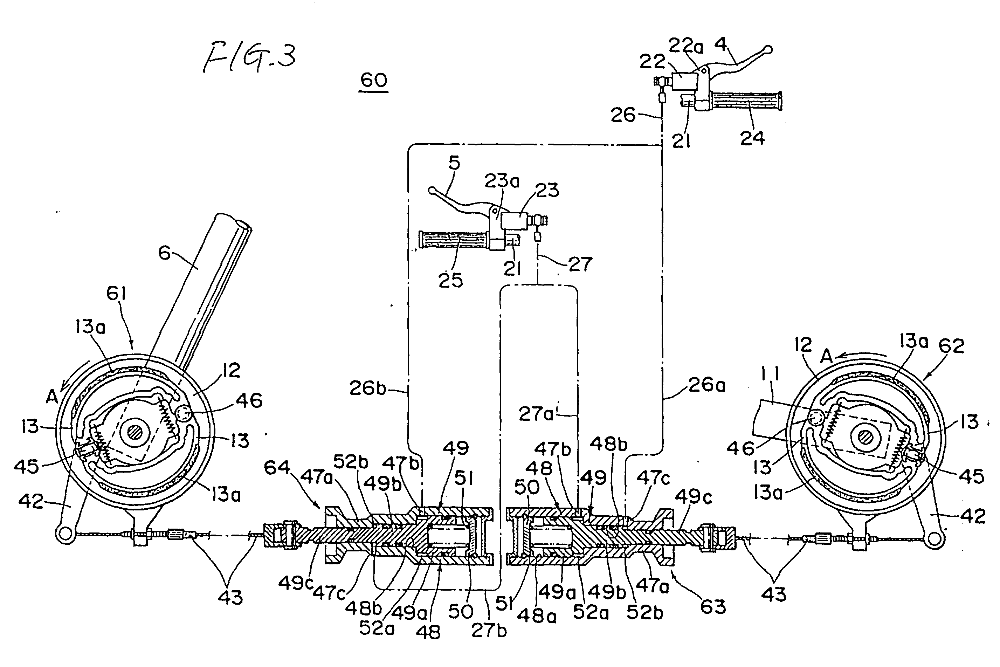

Another example of the bar handle vehicle brake system, which constitutes a second embodiment of the invention will be described with reference to FIG. 2; and another example of the bar handle vehicles brake system, which constitutes a third embodiment of the invention will be described with reference to FIG. 3. In FIGS. 2 and 3, parts corresponding functionally to those already described with reference to FIG. 1 (the first embodiment) are therefore designated by the same reference numerals or characters.

In a brake system 40 according to the second embodiment, its rear wheel brake 41 is a mechanical drum brake, and a wire cable 43 adapted to pull the brake arm 42 of the rear wheel brake 41 is connected to two branch pipes 26a and 27 of a rear wheel brake hydraulic pressure system, which are coupled to the first arid second brake operating members 4 and 5, respectively, through one cable actuator 44.

The rear wheel brake 41 is of two-leading type that an expanding cam shaft 45 and an anchor pin 46 functioning as a expanding are arranged between the ends of brake shoes 13 which are arranged confronted with each other inside the back plate 12. The base end portion of the brake arm 42 is fixedly secured to the cam shaft 45.

The cable actuator 44 is designed as follows: A cylinder bore 48 formed in a cylinder body 47 to accommodate a piston 49 is of stepped type; that is, it is made up of a large-diameter cylinder bore 48a and a small-diameter cylinder bore 48b. Accordingly, the piston 49 is also of stepped type; that is, it is made up of a large-diameter piston 49a which is accommodated in the large-diameter cylinder bore 48a, and a small-diameter piston 49b which is accommodated in the small-diameter cylinder bore 48. A return spring 51 is elastically interposed between the end of the large-diameter piston 49a and a receiving board 50 provided at the opening of the cylinder bore, to urge the stepped piston 49 towards the bottom of the small-diameter cylinder bore 48b at all times. A rod 49c small in diameter connects to the small-diameter piston 49b in such a manner that it penetrates the bottom wall 47a of the small-diameter cylinder bore 48b and protrudes from the cylinder body 47. The aforementioned wire cable 43 connects to the end of the rod 49c.

A first hydraulic pressure chamber 52a is formed between the bottom of the large-diameter cylinder bore 48a and the outer cylindrical surface of the base end portion of the large-diameter piston 49a, and a second hydraulic pressure chamber 52b is formed between the bottom of the small-diameter cylinder bore 48b and the outer cylindrical surface of the base end portion of the small-diameter piston 49b. The first hydraulic pressure chamber 52a large in diameter is communicated with a first inlet port 47b, which is coupled to one branch pipe 27a of the rear wheel braking hydraulic pressure system which is coupled to the second brake operating member 5 with a left brake lever. The second hydraulic pressure chamber 52b small in diameter is communicated with a second inlet port 47c, which is coupled to one branch pipe of a rear wheel braking hydraulic pressure system which connects to the first brake operating member 4 with a right brake lever.

The cable actuator 44 operates as follows: When the first brake operating member 4 and/or the second brake operating member 5 is operated, the hydraulic pressure master cylinders 22 and/or 23 applies a hydraulic pressure to the first hydraulic pressure chamber 52a and/or the second hydraulic pressure chamber 52b, so that the stepped piston 49 moves towards the opening of the stepped cylinder bore 48; that is, the rod 49c is pulled into the cable actuator. As a result, the wire cable 43 is drawn to operate the mechanical type rear wheel brake 41.

As was described above, according to the second embodiment of the invention, the two hydraulic pressure systems for the rear wheel brake, which connect to the first and second brake operating members 4 and 5, are coupled through one wire cable 43 to the rear wheel brake with the aid of the cable actuator 44. This feature reduces the number of components and accordingly the manufacturing cost. In addition, for the same reason, in the second embodiment, the brake system can be more freely laid on the vehicle body at lower cost than in the first embodiment.

Furthermore, in the cable actuator 44 of the second embodiment, because of the step between the large-diameter piston 49a and the small-diameter piston 49b of the stepped piston 49, the hydraulic pressure receiving area of the first hydraulic pressure chamber 52a large in diameter is larger than that of the second hydraulic pressure chamber 52b small in diameter. Hence, when the second brake operating member 5 connecting to the first hydraulic pressure chamber 52a is operated, the stepped piston 49 moves a long distance, to cause the rear wheel brake to produce a great braking force. On the other hand, when the first brake operating member 4 connecting to the second hydraulic pressure chamber 52b is operated, the stepped piston 49 moves a short distance, to cause the rear wheel brake to produce a small braking force.

On the other hand, the operator (or user) is generally positive that, in an ordinary bar handle vehicle, the front wheel brake and the rear wheel brake are operated with the respective brake operating members, and the right brake lever is for the front wheel brake, while the left brake lever or the foot pedal is for the rear wheel brake. However, in the second embodiment, owing to the presence of the cable actuator 44, the operation of the first brake operating member 4 with the right brake lever smoothly activates the front wheel brake body with the braking force of the rear wheel brake 41 decreased, and the operation of the second brake operating member 5 with the left brake lever also smoothly activates the rear wheel brake body with the braking force of the rear wheel brake 41 increased.

As was described before, FIG. 3 shows another example of the brake system, which constitutes the third embodiment of the invention. In the brake system 60, as a front wheel brake 61 and a rear wheel brake 62 are mechanical type drum brakes. Branch pipes 26a and 27a, which are in a rear wheel braking hydraulic pressure system and connect to first and second brake operating members 4 and 5, respectively, are coupled through a first cable actuator 63 to a wire cable 43 adapted to draw the brake arm 42 of the rear wheel brake 62. Similarly, branch pipes 26b and 27b, which are in a front wheel braking hydraulic pressure system and connect to the first and second brake operating members 4 and 5, respectively, are coupled through a second cable actuator 64 to another wire cable 43 adapted to draw the brake arm 42 of the front wheel brake 61.

The front wheel brake 61 and the rear wheel brake 62 are of single 2-leading type; that is, they are equal in structure to the rear wheel 41 in the second embodiment. In addition, the first and second cable actuators 63 and 64 are equal in structure to the cable actuator 44 in the second embodiment. The first cable actuator 63 connects to branch pipes 26a and 27a of the first and second brake operating members 4 in a rear wheel braking hydraulic pressure system, and to the wire cable 43 of the rear wheel brake 62, similarly as in the case of the second embodiment. The second cable actuator 64 connects to branch pipes 26b and 27b of the first and second brake operating members 4 and 5 in a front wheel braking hydraulic pressure system, and to the wire cable 43 of the front wheel brake 61, similarly as in the case of the second embodiment.

In the second embodiment, the front and rear wheel brakes 61 and 62 are the mechanical type drum brakes. Hence, the manufacture of the brake system is lower in cost than in the case where they are the hydraulic pressure type brakes. Furthermore, in the third embodiment, with the aid of the two cable actuators 63 and 64, the four hydraulic pressure systems extending from the first and second brake operating members 4 and 5 are combined with two wire cables 43 which connect to the front wheel brake 61 and the rear wheel brake 62. Hence, in the third embodiment, the brake system can be more freely laid on the vehicle body at lower cost than in the second embodiment.

The one branch pipe 26a of the first brake operating member 4 in the rear wheel braking hydraulic pressure system connects to the second hydraulic pressure chamber 52b small in pressure receiving area of the first cable actuator 63; the other branch pipe 26b of the first brake operating member 4 in the front wheel braking hydraulic pressure system connects to the first hydraulic pressure chamber 52a large in pressure receiving area of the second cable actuator 64; the one branch pipe 27a of the second brake operating member 5 in the rear wheel braking hydraulic pressure system connects to the first hydraulic pressure chamber 52a large in pressure receiving area of the first cable actuator 63; and the other branch pipe 27b of the second brake operating member 5 in the front wheel braking hydraulic system connects to the second hydraulic pressure chamber 52b small in pressure receiving area of the second cable actuator 64. Hence, the operation of the first brake operating member 4 with the right brake lever smoothly activates the front wheel brake body with the braking force of the rear wheel brake 61 decreased, and the operation of the second brake operating member 5 with the left brake lever also smoothly activates the rear wheel brake body with the braking force of the rear wheel brake 41 increased.

In the above-described embodiments, the left brake lever for the second brake operating member may be replaced with a foot pedal, and the mechanical type brake link device may be series of rods instead of the wire cables. Furthermore, in the embodiments, the cable actuators are of the type that the piston is drawn in the cylinder; however, the invention is not limited thereto or thereby; that is, the piston may be pushed out to draw the link device. In addition, the employment of the hydraulic pressure control sections may be omitted.

As was described above, in the brake system of the invention, one of the front and rear wheel brakes is the mechanical type brake which is operated in a draw mode with two link device such as wire cables or rods; the first cable actuator connects between one of the link device and one of the branch pipes in the system of the first brake operating member while the second cable actuator connects between the other link device and one of the branch pipes in the system of the second brake operating member; the hydraulic pressure chambers for introducing hydraulic pressures generated in the hydraulic pressure master cylinders, and the pistons which move in the cylinder bores by the hydraulic pressures thus introduced into the hydraulic pressure chambers are provided in the cylinder bores formed in the cable actuators, respectively; one of the link device is connected to the piston in the first cable actuator; the one branch pipe in the system of the first brake operating member connects to the hydraulic pressure chamber in the first cable actuator; the other link device connects to the piston in the second cable actuator; and the other branch pipe in the system of the second brake operating member connects to the hydraulic pressure chamber in the second cable actuator.

Hence, the brake system is of two-system interlock type that the front and rear wheel brakes are operated simultaneously when the first brake operating member and/or the second brake operating member is operated; however, the brake system employs the first and second cable actuators so that one of the brakes may be the mechanical drum brake low in manufacturing cost. Therefore, the brake system is, as a whole, lower in manufacturing coat than the one in which a hydraulic pressure type brake is employed. In addition, in the brake system of the invention, the link device between the cable actuator and the brake arm of the one brake is the wire cable or rod which is flexible and is smaller in diameter than the conventional hydraulic pressure pipe. Hence, the brake system can be freely laid on the vehicle body at lower cost.

The one brake, which is the mechanical type brake, is small in diameter and compact when compared with a hydraulic pressure type brake. Hence, with the brake system of the invention, unlike the hydraulic pressure type brake, it is unnecessary to provide spaces for the disk rotor and the caliper body.

Furthermore, the brake system of the invention can be readily applied even to the small rear wheel of a bar handle vehicle small in displacement such as a soft bike and a scooter which has a power unit (including the engine, the power transmitting mechanism, and the speed changing mechanism) on one side of the rear wheel, without modification of the tire size and the existing vehicle body structure. This feature markedly improves the brake performance of a bar handle vehicle without changing its specification.

In the brake system of another aspect of the present invention, one of the front and rear wheel brakes is the mechanical type brake which is operated in a draw mode with the link device such as a wire cables or rod; the cable actuator connects between the link device and the one branch pipe in the system of the first brake operating member and the one branch pipe in the system of the second brake operating member; the piston is accommodated in the cylinder bore formed in the cable actuator; the cylinder bore being the stepped cylinder bore including the large-diameter cylinder bore and the small diameter cylinder bore; the piston being the stepped piston having the large-diameter piston and the small-diameter piston which are accommodated in the large-diameter cylinder bore and the small-diameter cylinder bore, respectively and the first hydraulic pressure chamber is formed between the bottom of the large-diameter cylinder bore and the large-diameter piston, while the second hydraulic pressure chamber is formed between the bottom of the small-diameter cylinder bore and the small-diameter piston; the first hydraulic pressure chamber and the second hydraulic pressure chamber are connected to one of the branch pipes in the system of the first brake operating member and one of the branch pipes in the system of the second brake operating member.

Hence, the brake system of another aspect of the invention has the following effects or merits in addition to those of the brake system of the first aspect of the invention: The number of components is reduced, and accordingly the manufacturing cost is decreased as much. Furthermore, the brake system can be more freely laid on the vehicle body at lower cost.

Further, in the brake system of the invention, the first brake operating member is the right brake lever, while the second brake operating member is the left brake lever or the foot pedal, and one of the branch pipes in the system of the first brake operating member connects to the first hydraulic pressure chamber, while one of the branch pipes in the system of the second brake operating member connects to the second hydraulic pressure chamber.

Hence, the operation of the first brake operating member with the right brake lever smoothly activates the front wheel brake body with the braking force of the rear wheel brake 61 decreased, and the operation of the second brake operating member with the left brake lever also smoothly activates the rear wheel brake body with the braking force of the rear wheel brake increased.

Furthermore, in the brake system of the invention, the front and rear wheel brakes are the mechanical type brakes which are operated in a draw mode with the link device such as wire cables or rods, the first cable actuator connects between one of the link device and one of the branch pipes in the system of the first brake operating member and one of the branch pipes in the system of the second brake operating member, the second cable actuator connects between the other link device and the other branch pipe in the system of the first brake operating member and the other branch pipe in the system of the second brake operating member, and the pistons are accommodated in the cylinder bores formed in the cable actuators, respectively, each cylinder bore being the stepped cylinder bore including the large-diameter cylinder bore and the small- diameter cylinder bore, each piston being the stepped piston having the large-diameter piston and the small-diameter piston which are accommodated in the large-diameter cylinder bore and the small-diameter cylinder bore, respectively, the first hydraulic pressure chamber is formed between the bottom of each large-diameter cylinder bore and each large-diameter piston, while the second hydraulic pressure chamber is formed between the bottom of each small-diameter cylinder bore and each small-diameter piston, the first hydraulic pressure chamber and the second hydraulic pressure chamber of the first cable actuator connecting to one of the branch pipes in the system of the first brake operating member and one of the branch pipes in the system of the second brake operating member, respectively, while the first hydraulic pressure chamber and the second hydraulic pressure chamber of the second cable actuator connecting to the other branch pipe in the system of the first brake operating member and the other branch pipe in the system of the second brake operating chamber.

Hence, the brake system of the invention is much lower in manufacturing cost than the one which employs hydraulic pressure type brakes as its front and rear wheel brakes. Furthermore, in the brake system, with the aid of the first and second cable actuators, the four hydraulic pressure systems extended from the first and second brake operating members are combined with two wire cables which connect to the front wheel brake and the rear wheel brake. Hence, the brake system can be more freely laid on the vehicle body at lower cost than the above-described ones.

Moreover, in the brake system of the invention, the first brake operating member is the right brake lever, and one of the branch pipes in the system of the first brake operating member connects to the first hydraulic pressure chamber of the first cable actuator, while the other branch pipe in the system of the first brake operating member connects to the second hydraulic pressure chamber of the first cable actuator, and the second brake operating member is the left brake lever or the foot pedal, and one of the branch pipes in the system of the second brake operating member connects to the second hydraulic pressure chamber of the first cable actuator, while the other branch pipe in the system of the second brake operating member connects to the first hydraulic pressure chamber of the second cable actuator.

Hence, the operation of the first brake operating member with the right brake lever smoothly activates the front wheel brake body with the braking force of the rear wheel brake decreased, and the operation of the second brake operating member with the left brake lever also smoothly activates the rear wheel brake body with the braking force of the rear wheel brake increased.

## Claims

1. A two-system interlock type vehicle brake system (1) for a bar handle vehicle in which a hydraulic pressure pipe (26) connecting to a first hydraulic pressure master cylinder (22) which is operated with a first brake operating member (4), branches into a front wheel braking branch pipe (26b) and a rear wheel braking branch pipe (26a), while a hydraulic pressure pipe (27) connecting to second hydraulic pressure master cylinder (23) which is operated with a second brake operating member (5), branches into a front wheel braking branch pipe (27b) and a rear wheel braking branch pipe (27a), so that a front wheel brake (2) and a rear wheel brake (3) are interlocked by the operations of said first and second brake operating members (4,5), characterised in that:
one of said front and rear wheel brakes is a mechanical type brake (3) which is operated in a draw mode with two link devices (19,20) such as wire-cables or rods,
a first cable actuator (28) connects between one of the link devices (19) and one of the branch pipes (26a) in the system of said first brake operating member (4), while a second cable actuator (29) connects between the other link device (20) and one of the branch pipes (27a) in the system of said second brake operating member (5),
hydraulic pressure chambers (34) for introducing hydraulic pressures generated in said hydraulic pressure master cylinders (22,23), and pistons (33) which are disposed in cylinder bores (32) formed in said cable actuators (28,29), respectively, are provided, wherein said pistons move in said cylinder bores (32) by the hydraulic pressures thus introduced into said hydraulic pressure chambers (34),
one of said link devices (19) connects to said piston (33) in said first cable actuator (28),
the one branch pipe (26a) in the system of said first brake operating member (4) connects to said hydraulic pressure chamber (34) in said first cable actuator (28),
the other link device (20) connects to said piston (33) in said second cable actuator (29), and
the other branch pipe (27a) in the system of said second brake operating member (5) connects to said hydraulic pressure chamber (34) in said second cable actuator (29).

2. A two-system interlock type vehicle brake system (40) for a bar handle vehicle in which a hydraulic pressure pipe (26) connected to a first hydraulic pressure master cylinder (22) which is operated with a first brake operating member (4), branches into a front wheel braking branch pipe (26b) and a rear wheel braking branch pipe (26a), while a hydraulic pressure pipe (27) connected to second hydraulic pressure master cylinder (23) which is operated with a second brake operating member (5), branches into a front wheel braking branch pipe (27b) and a rear wheel braking branch pipe (27a), so that a front wheel brake (2) and a rear wheel brake (41) are interlocked by the operations of said first and second brake operating members (4,5), characterised in that:
one of said front and rear wheel brakes is a mechanical type brake (41) which is operated in a draw mode with a link device (43) such as a wire cables or rod,
a cable actuator (44) connects between said link device (43) and the one branch pipe (26a) in the system of said first brake operating member (4) and the one branch pipe (27a) in the system of said second brake operating member (5),
a piston (49) is accommodated in a cylinder bore (48) formed in said cable actuator (44),
said cylinder bore (48) being a stepped cylinder bore including a large-diameter cylinder bore (48a) and a small diameter cylinder bore (48b),
said piston (49) being a stepped piston having a large-diameter piston (49a) and a small-diameter piston (49b) which are accommodated in said large-diameter cylinder bore (48a) and said small-diameter cylinder bore (48b), respectively, and
a first hydraulic pressure chamber (52a) is formed between the bottom of said large-diameter cylinder bore (48a) and said large-diameter piston (49a), while a second hydraulic pressure chamber (52b) is formed between the bottom of said small-diameter cylinder bore (48b) and said small-diameter piston (49b),
said first hydraulic pressure chamber (52a) and said second hydraulic pressure chamber (52b) connect to one of the branch pipes (26a) in the system of said first brake operating member (4) and one of the branch pipes (27a) in the system of said second brake operating member (5).

3. A bar handle vehicle brake system as claimed in claim 2, characterised in that said first brake operating member is a right brake lever (4), while said second brake operating member is a left brake lever (5) or a foot pedal, and one of the branch pipes (26a) in the system of said first brake operating member (4) connects to said first hydraulic pressure chamber (52a), while one of the branch pipes (27a) in the system of said second brake operating member (5) connects to said second hydraulic pressure chamber (52b).

4. A two-system interlock type vehicle brake system (60) for a bar handle vehicle in which a hydraulic pressure pipe (26) connecting to a first hydraulic pressure master cylinder (22) which is operated with a first brake operating member (4), branches into a front wheel braking branch pipe (26b) and a rear wheel braking branch pipe (26a), while a hydraulic pressure pipe (27) connecting to second hydraulic pressure master cylinder (23) which is operated with a second brake operating member (5), branches into a front wheel braking branch pipe (27b) and a rear wheel braking branch pipe (27a), so that a front wheel brake (61) and a rear wheel brake (62) are interlocked by the operations of said first and second brake operating members (4,5), characterised in that:
said front and rear wheel brakes are mechanicai type brakes (61, 62) which are operated in a draw mode with link devices (43) such as wire cables or rods,
a first cable actuator (63) connects between one of said link devices (43) and one of the branch pipes (26a) in the system of said first brake operating member (4) and one of the branch pipes (27a) in the system of said second brake operating member (5),
a second cable actuator (64) connects between the other link device (43) and the other branch pipe (26b) in the system of said first brake operating member (4) and the other branch pipe (27b) in the system of said second brake operating member (5), and
pistons (49) are accommodated in cylinder bores (48) formed in said cable actuators (63,64), respectively,
each cylinder bore (48) being a stepped cylinder bore including a large-diameter cylinder bore (48a) and a small-diameter cylinder bore (48b),
each piston (49) being a stepped piston having a large diameter piston (49a) and a small-diameter piston (49b) which are accommodated in said large-diameter cylinder bore (48a) and said small-diameter cylinder bore (48b), respectively,
a first hydraulic pressure chamber (52a) is formed between the bottom of each large-diameter cylinder bore (48a) and each large-diameter piston (49a), while a second hydraulic pressure chamber (52b) is formed between the bottom of each small-diameter cylinder bore (48b) and each small-diameter piston (49b),
said first hydraulic pressure chamber (52a) and said second hydraulic pressure chamber (52b) of said first cable actuator (63) connecting to one of the branch pipes (26a) in the system of said first brake operating member (4) and one of the branch pipes (27a) in the system of said second brake operating member (5), respectively, while said first hydraulic pressure chamber (52a) and said second hydraulic pressure chamber (52b) of said second cable actuator (64) connecting to the other branch pipe (26b) in the system of said first brake operating member (4) and the other branch pipe (27b) in the system of said second brake operating chamber (5).

5. A bar handle vehicle brake system as claimed in claim 4, characterised in that said first brake operating member is a right brake lever (4), one of the branch pipes (26a) in the system of said first brake operating member (4) connects to said first hydraulic pressure chamber (52a) of said first cable actuator (63), while the other branch pipe (26b) in the system of said first brake operating member (4) connects to said second hydraulic pressure chamber (52b) of said first cable actuator (63), and said second brake operating member is a left brake lever (5)or a foot pedal, and one of the branch pipes (27a) in the system of said second brake operating member (5) connects to said second hydraulic pressure chamber (52b) of said first cable actuator (63), while the other branch pipe (27b) in the system of said second brake operating member (5) connects to said first hydraulic pressure chamber (52a) of said second cable actuator (64).

## Patentansprüche

1. Ineinandergreifendes Zweileitersystem einer Fahrzeug-Bremsanlage (1) für ein Lenkstangenfahrzeug in welchem ein erster hydraulischer Hauptdruckzylinder (22), der mit einem ersten Bauelement zum Bedienen der Bremse (4) bedient wird, mit einer hydraulischen Druckleitung (26) verbunden ist, die in eine Vorderrad-Bremszweig-Leitung (26b) und eine Hinterrad-Bremszweig-Leitung (26a) verzweigt, und ein zweiter hydraulischer Hauptdruckzylinder (23), der mit einem zweiten Bauelement zum Bedienen der Bremse (5) bedient wird, mit einer hydraulischen Druckleitung (27) verbunden ist, die in eine Vorderrad-Bremszweig-Leitung (27b) und eine Hinterrad-Bremszweig-Leitung (27a) verzweigt, so dass eine Vorderradbremse (2) und eine Hinterradbremse (3) bei der Betätigung des ersten und zweiten Bauelements zum Bedienen der Bremse (4, 5) ineinandergreifen,
dadurch gekennzeichnet, dass
eine der genannten Vorder- und Hinterradbremsen eine mechanischen Bremstyps (3) ist, der in einem Zugmodus durch zwei Verbindungsstücke (19, 20), wie z.B. Drahtseile oder Stangen, bedient wird,
ein erstes Kabel-Stellorgan (28) eines der Verbindungstücke (19) und eine der Zweigleitungen (26a) im System des genannten ersten Bauelements zur Bedienung der Bremse (4) verbindet, und ein zweites Kabel-Stellorgan (29) das andere Verbindungsstück (20) und eine der Zweigleitungen (27a) im System des genannten zweiten Bauelements zur Bedienung der Bremse (5) verbindet,
Hydraulik-Druckkammern (34) zum Einleiten von hydraulischem, in den hydraulischen Hauptdruckzylindern (22, 23) erzeugtem Druck und in Zylinderbohrungen (32) der Kabel-Stellorgane (28, 29) befindliche Kolben (33) vorhanden sind, damit genannte Kolben in genannten Zylinderbohrungen (32) durch den hydraulischen Druck, der dazu in die Hydraulik-Druckkammern (34) eingeführt wird, bewegt werden,
eines der Verbindungsstücke (19) mit dem Kolben (33) in dem ersten Kabel-Stellorgan (28) verbunden ist,
die eine Zweigleitung (26a) im System des ersten Bauelements zum Bedienen der Bremse (4) mit der hydraulischen Druckkammer (34) in dem ersten Kabel-Stellorgan (28) verbunden ist,
das andere Verbindungsstück (20) ist mit dem Kolben (33) in dem ersten Kabel-Stellorgan (29) verbunden ist, und
die andere Zweigleitung (27a) im System des zweiten Bauelements zum Bedienen der Bremse (4) ist mit der hydraulischen Druckkammer (34) im zweiten Kabel-Stellorgan (28) verbunden ist.

2. Ineinandergreifendes Zweileitersystem einer Fahrzeug-Bremsanlage (40) für ein Lenkstangenfahrzeug in welchem ein erster hydraulischer Hauptdruckzylinder (23), der mit einem ersten Bauelement zum Bedienen der Bremse (4) bedient wird, mit einer hydraulischen Druckleitung (27) verbunden ist, die in eine Vorderrad-Bremszweig-Leitung (26b) und eine Hinterrad-Bremszweig-Leitung (26a) verzweigt, und ein zweiter hydraulischer Hauptdruckzylinder (23), der mit einem zweiten Bauelement zum Bedienen der Bremse (5) bedient wird, mit einer hydraulischen Druckleitung (27) verbunden ist, die in eine Vorderrad-Bremszweig-Leitung (27b) und eine Hinterrad-Bremszweig-Leitung (27a) verzweigt, so dass eine Vorderradbremse (2) und eine Hinterradbremse (41) bei der Betätigung des ersten und zweiten Bauelements zum Bedienen der Bremse (4, 5) ineinandergreifen,
dadurch gekennzeichnet, dass
eine der Vorder- und Hinterradbremsen ein mechanischer Bremsentyp (41) ist, der in einem Zugmodus durch ein Verbindungsstück (43), wie z.B. Drahtseile oder Stäbe, bedient wird,
ein Kabel-Stellorgan (44) das Verbindungsstück (43) mit der Zweigleitung (26a) im System des ersten Bauelements zur Bedienung der Bremse (4) und mit der Zweigleitung (27a) im System des zweiten Bauelements zur Bedienung der Bremse (5) verbindet,
ein Zylinder (49) in einer im Kabel-Stellorgan (44) gebildeten Zylinderbohrung (48) untergebracht ist,
die Zylinderbohrung (48) eine gestufte Zylinderbohrung mit einer Zylinderbohrung (48a) großen Durchmessers und einer Zylinderbohrung (48b) kleinen Durchmessers ist,
der Kolben (49) ein gestufter Kolben ist, mit einem Kolben (49a) großen Durchmessers und einem Kolben (49b) kleinen Durchmesser, die in der Zylinderbohrung (48a) mit großem Durchmesser und der Zylinderbohrung (48b) mit kleinem Durchmesser untergebracht sind,
eine erste hydraulische Druckkammer (52a) zwischen dem Boden der Zylinderbohrung (48b) mit großem Durchmesser und dem Kolben (49b) mit großem Durchmesser gebildet ist, und eine zweite hydraulische Druckkammer (52b) zwischen dem Boden der genannten Zylinderbohrung (48a) mit kleinem Durchmesser und dem Kolben (49a) mit kleinem Durchmesser gebildet ist,
die erste hydraulische Druckkammer (52a) und die zweite hydraulische Druckkammer (52b) mit jeweils einer Zweigleitung (26a) im System des ersten Bauteils zur Betätigung der Bremse (4) und einer Zweigleitung (27a) im System des zweiten Bauteils zur Betätigung der Bremse (5) verbunden sind.

3. Eine Bremsanlage für ein Lenkstangenfahrzeug nach Anspruch 2, charakterisiert dadurch, dass
das erste Bauelement zur Bedienung der Bremse ein rechter Bremshebel (4) ist und das zweite Bauelement zur Bedienung der Bremse ein linker Bremshebel (5) oder ein Fußpedal ist, und
eine der Zweigleitungen (26a) im System des ersten Bauelements zur Bedienung der Bremse (4) die Verbindung mit der ersten hydraulischen Druckkammer (52a) herstellt, und
eine der Zweigleitungen (27a) im System des zweiten Bauelement zur Bedienung der Bremse (5) die Verbindung mit der zweiten hydraulischer Druckkammer (52a) herstellt.

4. Ineinandergreifendes Zweileitersystem einer Fahrzeug-Bremsanlage (60) für ein Lenkstangenfahrzeug in welchem ein erster hydraulischer Hauptdruckzylinder (22), der mit einem ersten Bauelement zum Bedienen der Bremse (4) bedient wird, mit einer hydraulischen Druckleitung (26) verbunden ist, die in eine Vorderrad-Bremszweig-Leitung (26b) und eine Hinterrad-Bremszweig-Leitung (26a) verzweigt, und ein zweiter hydraulischer Hauptdruckzylinder (23), der mit einem zweiten Bauelement zum Bedienen der Bremse (5) bedient wird, mit einer hydraulischen Druckleitung (27) verbunden ist, die in eine Vorderrad-Bremszweig-Leitung (27b) und eine Hinterrad-Bremszweig-Leitung (27a) verzweigt, so dass eine Vorderradbremse (61) und eine Hinterradbremse (62) bei der Betätigung des ersten und zweiten Bauelements zum Bedienen der Bremse (4, 5) ineinandergreifen,
dadurch gekennzeichnet, dass
die Vorderrad- und Hinterradbremsen (61, 62) mechanische Bremsentypen (3) sind, die in einem Zugmodus durch Verbindungsstücke (43), wie z.B. Drahtseile oder Stangen, bedient werden,
ein erstes Kabel-Stellorgan (63) eines der Verbindungstücke (43) mit einer der Zweigleitungen (26a) im System des genannten ersten Bauelements zur Bedienung der Bremse (4) und einer der Zweigleitungen (27a) im System des genannten zweiten Bauelements zur Bedienung der Bremse (5) verbindet,
ein zweites Kabel-Stellorgan (64) das andere Verbindungsstück (43) mit einer anderen Zweigleitung (26b) im System des ersten Bauelements zur Bedienung der Bremse (4) und einer anderen Zweigleitung (27b) im System des zweiten Bauelements zur Bedienung der Bremse (5) verbindet,
Zylinder (49) in Zylinderbohrungen (48), die in den jeweiligen Kabel-Stellorganen (63, 64) gebildet sind, untergebracht sind,
jede Zylinderbohrung (48) eine gestufte Zylinderbohrung mit einer Zylinderbohrung (48a) großen Durchmessers und einer Zylinderbohrung kleinen Durchmessers (48b) ist,
jeder Kolben (49) ein gestufter Kolben mit einem Kolben (49a) großen Durchmessers und einem Kolben (49b) kleinen Durchmessers ist, die jeweils in besagter Zylinderbohrung (48a) großen Durchmessers und besagter Zylinderbohrung (48b) kleinen Durchmessers untergebracht sind,
eine erste hydraulische Druckkammer (52a) zwischen dem Boden jeder Zylinderbohrung (48a) mit großem Durchmesser und jedem Kolben (49a) mit großem Durchmesser gebildet ist, und eine zweite hydraulische Druckkammer (52b) zwischen dem Boden jeder Zylinderbohrung (48b) mit kleinem Durchmesser und jedem Kolben (49a) mit kleinem Durchmesser gebildet ist,
die erste hydraulische Druckkammer (52a) und die zweite hydraulische Druckkammer (52b) des ersten Kabel-Stellorgan (63) mit jeweils einer Zweigleitung (26a) im System des ersten Bauteils zur Betätigung der Bremse (4) und einer Zweigleitung (27a) im System des zweiten Bauteils zur Betätigung der Bremse (5) verbunden sind, und die erste hydraulische Druckkammer (52a) und die zweite hydraulische Druckkammer (52b) von besagtem zweiten Kabel-Stellorgan (64) jeweils mit der anderen Zweigleitung (26b) im System des ersten Bauteils zur Betätigung der Bremse (4) und der anderen Zweigleitung (27b) im System des zweiten Bauteils zur Betätigung der Bremse (5) verbunden sind.

5. Ein Bremsanlage für ein Lenkstangenfahrzeug nach Anspruch 4, charakterisiert dadurch, dass
das erste Bauelement zur Bedienung der Bremse ein rechter Bremshebel (4) ist,
eine der Zweigleitungen (26a) im System des ersten Bauteils zur Betätigung der Bremse (4) mit der ersten Druckkammer (52a) des ersten Kabel-Stellorgans (63) verbunden ist,
die andere Zweigleitung (26b) im System des ersten Bauteils zur Betätigung der Bremse (4) mit der zweiten hydraulischen Druckkammer (52b) vom ersten Kabel-Stellorgan (63) verbunden ist, und
das zweite Bauelement zur Bedienung der Bremse ein linker Bremshebel (5) oder ein Fußpedal ist, und
eine der Zweigleitungen (27a) im System des zweiten Bauelements zur Bedienung der Bremse (5) die Verbindung mit der zweiten hydraulischen Druckkammer (52b) des zweiten Kabel-Stellorgans (63) herstellt, und
die andere Zweigleitung (27b) im System des zweiten Bauelements zur Bedienung der Bremse (5) die Verbindung mit der zweiten hydraulischen Druckkammer (52a) des zweiten Kabel-Stellorgans (64) herstellt.

## Revendications

1. Système de freinage (1) pour véhicule, du type à interverrouillage à deux circuits, pour un véhicule équipé d'un guidon, dans lequel un tube à pression hydraulique (26), connecté à un premier maître-cylindre à pression hydraulique (22) actionné par un premier élément d'actionnement de frein (4), est branché dans un tube de branchement (26b) pour le freinage de la roue avant et dans un tube de branchement (26a) pour le freinage de la roue arrière, tandis qu'un tube à pression hydraulique (27), connecté à un deuxième maître-cylindre à pression hydraulique (23) actionné par un deuxième élément d'actionnement de frein (5), est branché dans un tube de branchement (27b) pour le freinage de la roue avant et dans un tube de branchement (27a) pour le freinage de la roue arrière, de sorte qu'un frein de roue avant (2) et un frein de roue arrière (3) sont interverrouillés par les actionnements dudit premier et dudit deuxième élément d'actionnement de frein (4, 5),
caractérisé en ce que :
- l'un parmi ledit frein de roue avant et ledit frein de roue arrière est un frein du type mécanique (3) actionné dans un mode de traction avec deux dispositifs de liaison (19, 20) tels que des systèmes à câbles ou à tiges,
- un premier actionneur à câble (28) est connecté entre l'un des dispositifs de liaison (9) et l'un des tubes de branchement (26a) dans le système dudit premier élément d'actionnement de frein (4), tandis qu'un deuxième actionneur à câble (29) est connecté entre l'autre dispositif de liaison (20) et l'un des tubes de branchement (27a) dans le système dudit deuxième élément d'actionnement de frein (5),
- il est prévu des chambres à pression hydraulique (34) pour introduire les pressions hydrauliques engendrées dans lesdits maîtres-cylindres à pression hydraulique (22, 23), et des pistons (33) qui sont disposés dans des perçages cylindriques (32) formés dans lesdits actionneurs à câbles (28, 29), respectivement, et lesdits pistons se déplaçant dans lesdits perçages cylindriques (32) sous les pressions hydrauliques ainsi introduites dans lesdites chambres à pression hydraulique (34),
- l'un desdits dispositifs de liaison (19) est connecté audit piston (33) dans ledit premier actionneur à câble (28),
- ledit tube de branchement (26a) dans le système dudit premier élément d'actionnement de frein (4) est connecté à ladite chambre de pression hydraulique (34) dans ledit premier actionneur à câble (28),
- l'autre dispositif de liaison (20) est connecté audit piston (33) dans ledit deuxième actionneur à câble (29), et
- l'autre tube de branchement (27a) dans le système dudit deuxième élément d'actionnement de frein (5) est connecté à ladite chambre de pression hydraulique (34) dudit deuxième actionneur à câble (29).

2. Système de freinage (40) pour véhicule, du type à interverrouillage à deux circuits, pour un véhicule équipé d'un guidon, dans lequel un tube de pression hydraulique (26), connecté à un premier maître-cylindre à pression hydraulique (22) actionné avec un premier élément d'actionnement de frein (4), est branché dans un tube de branchement (26b) pour le freinage de la roue avant et dans un tube de branchement (26a) pour le freinage de la roue avant, tandis qu'un tube de pression hydraulique (27), connecté à un deuxième maître-cylindre à pression hydraulique (23) actionné avec un deuxième élément d'actionnement de frein (5), est branché dans un tube de branchement (27b) pour le freinage de la roue avant et dans un tube de branchement (27a) pour le freinage de la roue arrière, de sorte qu'un frein de roue avant (2) et un frein de roue arrière (41) sont interverrouillés par les actionnements dudit premier et dudit deuxième élément d'actionnement de frein (4, 5),
caractérisé en ce que :
- l'un parmi ledit frein de roue avant et ledit frein de roue arrière est un frein du type mécanique (41) actionné dans un mode de traction avec un dispositif de liaison (43) tel qu'un système à câbles ou à tiges,
- un actionneur à câble (44) est connecté entre ledit dispositif de liaison (43) et le tube de branchement (26a) dans le système dudit premier élément d'actionnement de frein (4) et le tube de branchement (27a) dans le système dudit deuxième élément d'actionnement de frein (5),
- un piston (49) est logé dans un perçage cylindrique (48) formé dans ledit actionneur à câble (44),
- ledit perçage cylindrique (48) est un perçage cylindrique en gradins qui inclut un perçage cylindrique de grand diamètre (48a) et un perçage cylindrique de petit diamètre (48b),
- ledit piston (49) est un piston en gradins ayant un piston de grand diamètre (49a) et un piston de petit diamètre (49b) qui sont logés dans ledit perçage cylindrique de grand diamètre (48a) et dans ledit perçage cylindrique de petit diamètre (48b), respectivement, et
- une première chambre à pression hydraulique (52a) est formée entre le fond dudit perçage cylindrique de grand diamètre (48a) et ledit piston de grand diamètre (49a), tandis qu'une deuxième chambre à pression hydraulique (52b) est formée entre le fond dudit perçage cylindrique de petit diamètre (48b) et ledit piston de petit diamètre (49b),
ladite première chambre à pression hydraulique (52a) et ladite deuxième chambre à pression hydraulique (52b) sont connectées à l'un des tubes de branchement (26a) dans le système dudit premier élément d'actionnement de frein (4) et à l'un des tubes de branchement (27a) dans le système dudit deuxième élément d'actionnement de frein (5).

3. Système de freinage pour véhicule équipé d'un guidon, selon la revendication 2, caractérisé en ce que ledit premier élément d'actionnement de frein est un levier de freinage droit (4), tandis que ledit deuxième élément d'actionnement de frein est un levier de freinage de gauche (5) ou une pédale à pied, et l'un des tubes de branchement (26a) dans le système dudit premier élément d'actionnement de frein (4) est connecté à ladite première chambre à pression hydraulique (52a), tandis que l'un des tubes de branchement (27a) dans le système dudit deuxième élément d'actionnement de frein (5) est connecté à ladite deuxième chambre à pression hydraulique (52b).

4. Système de freinage (60) pour véhicule, du type à interverrouillage à deux circuits, pour un véhicule équipé d'un guidon, dans lequel un tube à pression hydraulique (26), connecté à un premier maître-cylindre à pression hydraulique (22) actionné par un premier élément d'actionnement de frein (4), est branché dans un tube de branchement (26b) pour le freinage de la roue avant et dans un tube de branchement (26a) pour le freinage de la roue arrière, tandis qu'un tube à pression hydraulique (27), connecté à un deuxième maître-cylindre à pression hydraulique (23) actionné par un deuxième élément d'actionnement de frein (5), est branché dans un tube de branchement (27b) pour le freinage de la roue avant et dans un tube de branchement (27a) pour le freinage de la roue arrière, de sorte qu'un frein de roue avant (61) et un frein de roue arrière (62) sont interverrouillés par les actionnements dudit premier et dudit deuxième élément d'actionnement de frein (4, 5),
caractérisé en ce que :
- ledit frein de roue avant et ledit frein de roue arrière sont des freins du type mécanique (61, 62) actionnés dans un mode de traction avec des dispositifs de liaison (43) tels que des systèmes à câbles ou à tiges,
- un premier actionneur à câble (63) est connecté entre l'un des dispositifs de liaison (43) et l'un des tubes de branchement (26a) dans le système dudit premier élément d'actionnement de frein (4) et l'un des tubes de branchement (27a) dans le système dudit deuxième élément d'actionnement de frein (5),
- un deuxième actionneur à câble (64) est connecté entre l'autre dispositif de liaison (43) et l'autre tube de branchement (26b) dans le système dudit premier élément d'actionnement de frein (4) et l'autre tube de branchement (27b) dans le système dudit deuxième élément d'actionnement de frein (5), et
- des pistons (49) sont logés dans des perçages cylindriques (48) formés dans lesdits actionneurs à câble (63, 64), respectivement,
- chaque perçage cylindrique (48) est un perçage cylindrique en gradins qui inclut un perçage cylindrique de grand diamètre (48a) et un perçage cylindrique de petit diamètre (48b),
- chaque piston (49) est un piston en gradins ayant un piston de grand diamètre (49a) et un piston de petit diamètre (49b) qui sont logés dans ledit perçage cylindrique de grand diamètre (48a) et dans ledit perçage cylindrique de petit diamètre (48b), respectivement,
- une première chambre de pression hydraulique (52a) est formée entre le fond de chaque perçage cylindrique de grand diamètre (48a) et chaque piston de grand diamètre (49a), tandis qu'une deuxième chambre à pression hydraulique (52b) est formée entre le fond de chaque perçage cylindrique de petit diamètre (48b) et chaque piston de petit diamètre (49b),
ladite première chambre à pression hydraulique (52a) et ladite deuxième chambre à pression hydraulique (52b) dudit premier actionneur à câble (63) sont connectées à l'un des tubes de branchement (26a) dans le système dudit premier élément d'actionnement de frein (4) et à l'un des tubes de branchement (27a) dans le système dudit deuxième élément d'actionnement de frein (5), respectivement, tandis que ladite première chambre à pression hydraulique (52a) et ladite deuxième chambre à pression hydraulique (52b) dudit deuxième actionneur à câble (64) sont connectées à l'autre tube de branchement (26b) dans le système dudit premier élément d'actionnement de frein (4) et à l'autre tube de branchement (27b) dans le système dudit deuxième élément d'actionnement de frein (5).

5. Système de freinage pour véhicule équipé d'un guidon, selon la revendication 4, caractérisé en ce que ledit premier élément d'actionnement de frein est un levier de freinage droit (4), l'un des tubes de branchement (26a) dans le système dudit premier élément d'actionnement de frein (4) étant connecté à ladite première chambre à pression hydraulique (52a) dudit premier actionneur à câble (63), tandis que l'autre tube de branchement (26b) dans le système dudit premier élément d'actionnement de frein (4) est connecté à ladite deuxième chambre à pression hydraulique (52b) dudit premier actionneur à câble (63), et ledit deuxième élément d'actionnement de frein est un levier de freinage de gauche (5) ou une pédale à pied, et l'un des tubes de branchement (27a) dans le système dudit deuxième élément d'actionnement de frein (5) est connecté à ladite deuxième chambre à pression hydraulique (52b) dudit premier actionneur à câble (63), tandis que l'autre tube de branchement (27b) dans le système dudit deuxième élément d'actionnement de frein (5) est connecté à ladite première chambre à pression hydraulique (52a) dudit deuxième actionneur à câble (64).
